# FASCICULE DE BREVET EUROPEEN

(11) **EP 0 559 529 B1**
(45) Date de publication et mention de la délivrance du brevet: **11.09.1996**
(21) Numéro de dépôt: 93400500.0
(22) Date de dépôt: 26.02.1993
(51) Int. Cl.: G01N 15/02

(54) **Granulomètre à laser**
Laserverwendender Teilchenmesser
Laser granulometer

(30) Priorité: 04.03.1992 FR 9202609
(43) Date de publication de la demande: 08.09.1993
(73) Titulaire: COMPAGNIE INDUSTRIELLE DES LASERS CILAS, F-91460 Marcoussis (FR)
(72) Inventeur: Duvent, Jean-Louis Michel, F-91160 Longjumeau (FR)
(74) Mandataire: Bonnetat, Christian

(56) Documents cités:
- EP-A- 0 018 458
- WO-A-90/10216
- FR-A- 2 300 337
- FR-A- 2 415 801
- PATENT ABSTRACTS OF JAPAN vol. 9, no. 13 (P-328)(1736) 19 Janvier 1985 & JP-A-59 160 741
- PATENT ABSTRACTS OF JAPAN vol. 14, no. 249 (P-1053)(4192) 28 Mai 1990 & JP-A-20 66 426
- PATENT ABSTRACTS OF JAPAN vol. 14, no. 249 (P-1053)(4192) 28 Mai 1990 & JP-A-20 66 425
- PATENT ABSTRACTS OF JAPAN vol. 7, no. 274 (P-241)(1419) 7 Décembre 1983 & JP-A-58 153 107

## Description

La présente invention concerne un dispositif pour déterminer la répartition granulométrique d'un mélange de particules, c'est-à-dire permettant de tracer une courbe représentative des variations, en fonction du diamètre des particules du mélange, de la proportion des particules ayant le même diamètre.

Par les documents US-A-3 807 864, FR-A-2 300 337, FR-A-2 415 801 et US-A-4 274 741, par exemple, on connaît déjà un dispositif pour déterminer la répartition granulométrique d'un mélange de particules en circulation, par exemple en suspension dans un courant fluide (liquide ou gaz). Un tel dispositif comporte une source laser, dont le faisceau traverse un récipient transparent parcouru par le courant fluide transportant lesdites particules, et un système optique convergent pour former une figure de diffraction et/ou de diffusion (en fonction de la taille desdites particules) des particules éclairées par le faisceau laser. Un ensemble de détecteurs photosensibles, répartis radialement dans le plan focal dudit système optique, engendre des signaux électriques représentatifs de ladite figure de diffraction-diffusion et adressés à un calculateur, traitant lesdits signaux électriques pour déterminer la répartition granulométrique dudit mélange de particules.

On sait de plus que, avec un tel dispositif, les mesures effectuées dans ledit plan focal sont significatives pour les grosses particules lorsqu'elles sont réalisées au voisinage de l'axe du faisceau laser et pour les fines particules lorsqu'elles sont réalisées loin dudit axe, c'est-à-dire avec des valeurs élevées de l'angle de diffraction et/ou de diffusion.

L'objet de la présente invention est de perfectionner le dispositif mentionné ci-dessus, de façon à permettre aussi bien une analyse de grande finesse près de l'axe du faisceau laser pour la mesure des grosses particules qu'une analyse sous un angle aussi grand que possible pour la mesure des fines particules.

A cette fin, selon l'invention, le dispositif pour déterminer la répartition granulométrique d'un mélange de particules en circulation, comportant :
- un générateur d'un faisceau de lumière monochromatique ;
- un récipient transparent, disposé sur le trajet dudit faisceau et parcouru par ledit mélange de particules ;
- un système optique convergent pour former, dans son plan focal, une figure de diffraction-diffusion desdites particules éclairées par ledit faisceau ;
- un ensemble de détecteurs photosensibles répartis radialement dans ledit plan focal du système optique ; et
- des moyens de traitement des signaux électriques émis par ledit ensemble de détecteurs photosensibles ;
est remarquable en ce qu'il comporte une source de lumière monochromatique additionnelle émettant un faisceau additionnel, incliné par rapport au faisceau dudit générateur et adressé audit récipient transparent.

Ainsi, l'analyse de la diffraction et/ou de la diffusion peut être réalisée sous des angles supplémentaires, puisque ledit faisceau additionnel de la source additionnelle présente une incidence différente de celle du faisceau dudit générateur.

Avantageusement, ledit ensemble de détecteurs photosensibles observe en alternance la figure de diffraction-diffusion formée par ledit faisceau du générateur et celle formée par ledit faisceau additionnel. Ceci peut être obtenu par une commutation électrique ou mécanique. Par exemple, ledit générateur et ladite source additionnelle fonctionnent en alternance, ou bien, ledit générateur et ladite source additionnelle fonctionnant simultanément, il existe des moyens de filtration alternatifs spécifiques des deux faisceaux de lumière monochromatique.

Dans le premier cas, les longueurs d'onde desdits faisceaux peuvent être égales ou différentes. Dans le second cas, il est avantageux qu'elles soient différentes.

Le faisceau additionnel est par exemple véhiculé par une fibre optique, disposée latéralement.

De préférence, la section du faisceau additionnel peut être petite par rapport à celle du faisceau dudit générateur et ledit faisceau additionnel est adressé directement, c'est-à-dire sans l'intermédiaire d'un système optique, audit récipient transparent.

Afin d'assurer la continuité dans les mesures résultantes analysées avec les deux faisceaux, il est avantageux de prévoir au moins un premier détecteur photosensible additionnel, relié auxdits moyens de traitement et permettant le recouvrement des zones angulaires de mesure spécifiques dudit générateur et de ladite source additionnelle.

L'angle d'inclinaison du faisceau additionnel par rapport au faisceau du générateur peut prendre toute valeur appropriée. Cependant, il s'est avéré avantageux de lui donner une valeur voisine de 45°.

La présence dudit faisceau additionnel incliné accroît de façon importante la limite supérieure de l'angle d'analyse de la diffraction et/ou de la diffusion. Aussi, pour profiter de ce fait et augmenter la finesse de l'analyse des particules fines, on prévoit au moins un second détecteur photosensible additionnel, non nécessairement disposé dans le plan focal dudit système optique et susceptible de recevoir la lumière diffractée et/ou diffusée par lesdites particules sous des angles au moins égaux à 45°.

Dans un mode de réalisation du dispositif de l'invention, par rapport au sens de propagation du faisceau émis par ledit générateur, ledit récipient transparent est disposé en amont dudit système optique et ledit faisceau additionnel est dirigé vers ledit récipient transparent, du côté de celui-ci opposé audit système optique.

En variante, ledit récipient transparent peut être disposé en aval dudit système optique et ledit faisceau additionnel est dirigé vers ledit récipient transparent du côté de celui-ci, dirigé vers ledit système optique.

Les figures du dessin annexé feront bien comprendre comment l'invention peut être réalisée. Sur ces figures, des références identiques désignent des éléments semblables.

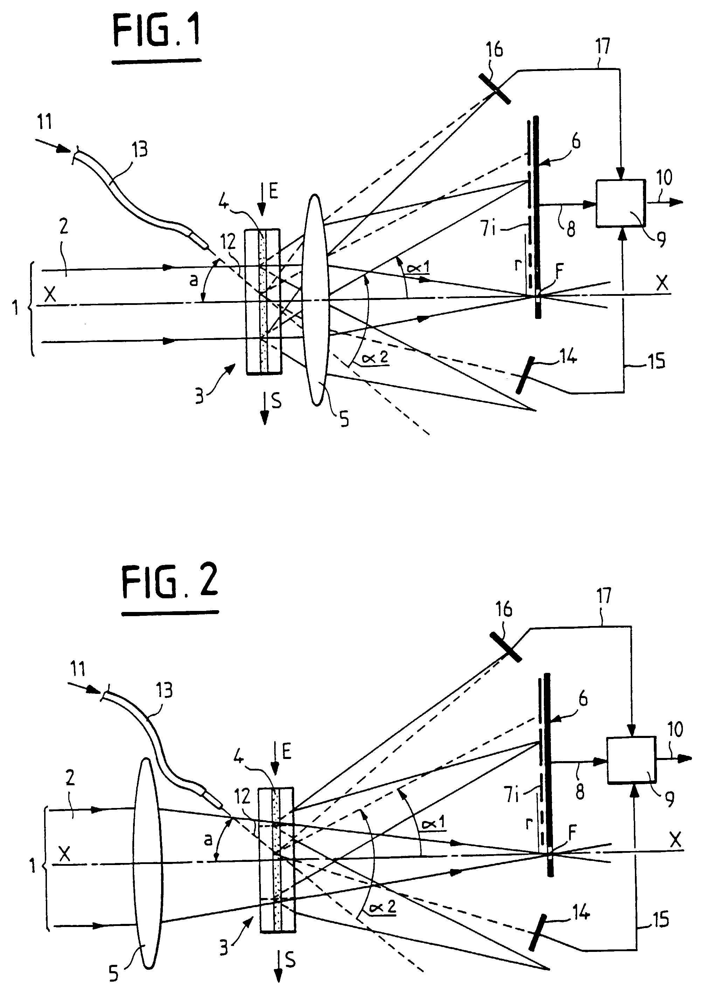

Les figures 1 et 2 sont des vues schématiques montrant deux modes de réalisation du dispositif conforme à la présente invention.

Le dispositif, conforme à la présente invention et montré par la figure 1, comporte un générateur laser 1 (non représenté) engendrant un faisceau laser 2 à rayons parallèles, d'axe X-X. Sur le trajet du faisceau laser 2 est disposé un récipient transparent 3 en forme de cuve à faces parallèles et pourvu d'un conduit plat 4, par exemple orthogonal à l'axe X-X, à travers lequel circule un mélange de particules. Ces particules peuvent être projetées à sec à travers ledit récipient ou bien être en suspension dans un courant de liquide. Le mélange desdites particules est mis en circulation par des moyens connus non représentés, pour entrer à une extrémité du conduit 4 (flèche E) et en sortir à son autre extrémité (flèche S).

En aval du récipient 3 (par rapport au sens de propagation du faisceau laser 2), le dispositif de la figure 1 comporte un système optique convergent 5, coaxial à l'axe X-X, de sorte que son foyer F se trouve sur ce dernier.

Dans le plan focal du système optique 5 est prévu un ensemble de détecteurs photosensibles 6, dont les zones sensibles 7i sont réparties radialement à partir de l'axe X-X. La pluralité des zones sensibles 7i ne sont pas forcément centrées sur le même rayon, mais elles sont situées à des distances radiales différentes les unes des autres. L'intervalle entre les zones sensibles 7i et la surface desdites zones sensibles 7i croissent en fonction de leur distance r à l'axe X-X.

Par une liaison 8, l'ensemble de détecteurs photosensibles 6 est relié à un calculateur 9, susceptible de traiter les signaux reçus desdits détecteurs et d'émettre à sa sortie 10 des signaux représentatifs de la répartition granulométrique du mélange des particules véhiculées par le courant fluide traversant le conduit 4.

Ces particules, éclairées par le faisceau 2, diffractent et/ou diffusent (en fonction de leur taille) de la lumière sous des angles α1 différents, comme cela est illustré sur la figure 1. Il en résulte dans le plan focal du système optique 5 une figure de diffraction-diffusion de révolution centrée sur l'axe X-X.

En fonction de leur taille, les particules participent à l'éclairement de régions différentes du plan focal du système optique 5 : les grosses particules adressent de la lumière au voisinage de l'axe X-X (c'est-à-dire à des surfaces sensibles 7i dont la distance r à l'axe X-X est petite), tandis que les fines particules adressent de la lumière depuis l'axe X-X jusqu'à des régions éloignées de l'axe X-X (c'est-à-dire à des surfaces sensibles 7i dont la distance r à l'axe X-X est grande).

Selon l'invention, on prévoit une source laser additionnelle 11 (non représentée) engendrant un faisceau laser à rayons parallèles additionnel 12, incliné d'un angle a, par exemple égal à 45°, par rapport à l'axe X-X du faisceau 2. Le faisceau additionnel 12 est véhiculé par une fibre optique 13, disposée latéralement, et il est adressé au récipient transparent 3, du côté de celui-ci opposé au système optique 5. Il permet d'analyser la diffraction et/ou la diffusion des particules sous des angles α2 = α1 + a.

Le générateur 1 et la source 11 fonctionnent en alternance, de sorte que le récipient 3 est alternativement éclairé par le faisceau 2 et par le faisceau additionnel 12, qui forment donc alternativement une figure de diffraction-diffusion du mélange de particules. En variante, le générateur 1 et la source 11 pourraient fonctionner simultanément, des moyens de filtration alternatifs (non représentés), spécifiques de chacun des faisceaux 2 et 12, étant prévus sur le trajet desdits faisceaux. Ainsi, ledit ensemble de détecteurs photosensibles 6 observe en alternance la figure de diffraction-diffusion formée par ledit faisceau 2 du générateur 1 et celle formée par ledit faisceau additionnel 12.

Au moins un détecteur photosensible 14, relié audit calculateur 9 par une liaison 15, permet le recouvrement des zones angulaires α1 de mesure du faisceau 2 et des zones angulaires α2 de mesure du faisceau additionnel 12.

Puisque le faisceau additionnel 12 permet d'accroître la valeur limite supérieure de l'angle d'analyse de diffraction et de diffusion, on prévoit au moins un détecteur photosensible additionnel 16, non nécessairement disposé dans le plan focal du système optique 5 et susceptible de recevoir de la lumière diffractée et/ou diffusée sous des angles au moins égaux à 45°. Une pluralité de détecteurs 16 (un seul est représenté sur la figure 1) peut être prévue pour couvrir l'espace correspondant à des angles α2 dont la valeur va de 45° jusqu'à 90°, voire au-delà.

On comprendra aisément, en fonction de ce qui a été dit précédemment, que les détecteurs 16 permettent une analyse plus fine des particules fines du mélange de particules.

Bien entendu, une liaison 17 est prévue entre les détecteurs 16 et le calculateur 9, de sorte que, à la sortie 10 du calculateur 9, apparaissent de plus des signaux concernant la répartition de granulométrie des particules les plus fines.

On voit donc que, grâce à l'invention, on multiplie les canaux d'analyse de la figure de diffraction-diffusion.

Dans le mode de réalisation de la figure 2, on retrouve les éléments 1 à 17 de la figure 1. Cependant, de cette variante de réalisation, le récipient transparent 3 se trouve en aval du système optique 5, de sorte que le faisceau additionnel 12 est introduit dans le récipient transparent 3, en aval dudit système optique.

## Revendications

1. Dispositif pour déterminer la répartition granulométrique d'un mélange de particules en circulation, comportant :
- un générateur (1) d'un faisceau de lumière monochromatique (2) ;
- un récipient transparent (3), disposé sur le trajet dudit faisceau (2) et parcouru par ledit mélange de particules ;
- un système optique convergent (5) pour former, dans son plan focal, une figure de diffraction-diffusion desdites particules éclairées par ledit faisceau (2) ;
- un ensemble (6) de détecteurs photosensibles (7i) répartis radialement dans ledit plan focal du système optique (5) ; et
- des moyens (9) de traitement des signaux électriques émis par ledit ensemble de détecteurs photosensibles (6) :
caractérisé en ce qu'il comporte une source de lumière monochromatique additionnelle (11) émettant un faisceau additionnel (12), incliné par rapport au faisceau (2) dudit générateur (1) et adressé audit récipient transparent (3).

2. Dispositif selon la revendication 1,
caractérisé en ce que ledit ensemble (6) de détecteurs photosensibles observe en alternance la figure de diffraction-diffusion formée par ledit faisceau (2) du générateur (1) et celle formée par ledit faisceau additionnel (12).

3. Dispositif selon l'une des revendications 1 ou 2,
caractérisé en ce que ledit faisceau (2) du générateur (1) et ledit faisceau additionnel (12) ont la même longueur d'onde.

4. Dispositif selon l'une des revendications 1 ou 2,
caractérisé en ce que ledit faisceau (2) du générateur (1) et ledit faisceau additionnel (12) ont des longueurs d'onde différentes.

5. Dispositif selon l'une des revendications 1 à 4,
caractérisé en ce que ledit faisceau additionnel est véhiculé par une fibre optique (13).

6. Dispositif selon l'une des revendications 1 à 5,
caractérisé en ce que la section du faisceau additionnel est petite par rapport à celle du faisceau (2) dudit générateur (1) et en ce que ledit faisceau additionnel est adressé directement audit récipient transparent.

7. Dispositif selon l'une quelconque des revendications 1 à 6,
caractérisé en ce qu'il comporte au moins un premier détecteur photosensible additionnel (14), relié auxdits moyens de traitement (9) et permettant le recouvrement des zones angulaires de mesure spécifiques dudit générateur (1) et de ladite source additionnelle (11).

8. Dispositif selon l'une quelconque des revendications 1 à 7,
caractérisé en ce que l'angle d'inclinaison du faisceau additionnel (12) par rapport au faisceau (2) du générateur est de l'ordre de 45°.

9. Dispositif selon l'une quelconque des revendications 1 à 8,
caractérisé en ce qu'il comporte au moins un second détecteur photosensible additionnel (16), non nécessairement disposé dans le plan focal dudit système optique (5) et susceptible de recevoir la lumière diffractée et/ou diffusée par lesdites particules sous des angles au moins égaux à 45°.

10. Dispositif selon l'une quelconque des revendications 1 à 9,
caractérisé en ce que, par rapport au sens de propagation du faisceau (2) émis par ledit générateur (1), ledit récipient transparent (3) est disposé en amont dudit système optique (5) et en ce que ledit faisceau additionnel (12) est dirigé vers ledit récipient transparent (3), du côté de celui-ci opposé audit système optique (5).

11. Dispositif selon l'une quelconque des revendications 1 à 9,
caractérisé en ce que, par rapport au sens de propagation du faisceau (2) émis par ledit générateur (1), ledit récipient transparent (3) est disposé en aval dudit système optique (5) et en ce que ledit faisceau additionnel (12) est dirigé vers ledit récipient transparent (3) du côté de celui-ci, dirigé vers ledit système optique.

## Patentansprüche

1. Vorrichtung zur Ermittlung der Korngrößenverteilung einer in Zirkulation befindlichen Teilchenmischung umfassend:
- einen Generator (1) für einen monochromatischen Lichtstrahl (2);
- einen transparenten Behälter (3), der auf dem Weg des Strahls (2) angeordnet ist und von der Teilchenmischung durchströmt wird;
- ein konvergentes optisches System (5) zur Erzeugung einer Darstellung der Beugung/Streuung der vom Strahl (2) angeleuchteten Teilchen in seiner Fokusebene;
- einen Aufbau (6) aus lichtempfindlichen Detektoren (7i), die in der Fokusebene des optischen Systems (5) radial verteilt sind; und
- Mittel (9) zur Verarbeitung der vom Aufbau (6) aus lichtempfindlichen Detektoren emittierten elektrischen Signale;
dadurch gekennzeichnet, daß sie eine zusätzliche Quelle (11) für monochromatisches Licht aufweist, die einen zusätzlichen Strahl (12) emittiert, der bezüglich des Strahls (2) des Generators (1) geneigt ist und auf den transparenten Behälter (3) gerichtet ist.

2. Vorrichtung nach Anspruch 1, dadurch gekennzeichnet, daß der Aufbau (6) aus lichtempfindlichen Detektoren abwechselnd die vom Strahl (2) des Generators (1) erzeugte Darstellung der Beugung/Streuung und jene wahrnimmt, die vom zusätzlichen Strahl erzeugt wird.

3. Vorrichtung nach einem der Ansprüche 1 oder 2, dadurch gekennzeichnet, daß der Strahl (2) des Generators (1) und der zusätzliche Strahl (12) die gleiche Wellenlänge haben.

4. Vorrichtung nach einem der Ansprüche 1 oder 2, dadurch gekennzeichnet, daß der Strahl (2) des Generators (1) und das zusätzliche Strahl (12) verschiedene Wellenlängen haben.

5. Vorrichtung nach einem der Ansprüche 1 bis 4, dadurch gekennzeichnet, daß der zusätzliche Strahl von einer Lichtleitfaser (13) übertragen wird.

6. Vorrichtung nach einem der Ansprüche 1 bis 5, dadurch gekennzeichnet, daß der Querschnitt des zusätzlichen Strahls in bezug auf denjenigen des Strahls (2) des Generators (1) klein ist und daß der zusätzliche Strahl direkt auf den transparenten Behälter gerichtet ist.

7. Vorrichtung nach einem der Ansprüche 1 bis 6, dadurch gekennzeichnet, daß sie wenigstens einen ersten zusätzlichen lichtempfindlichen Detektor (14) aufweist, der mit Mitteln (9) zur Verarbeitung verbunden ist und das Abdecken der Winkelbereiche gestattet, die für den Generator (1) und die zusätzliche Quelle (11) spezifisch sind.

8. Vorrichtung nach einem der Ansprüche 1 bis 7, dadurch gekennzeichnet, daß der Neigungswinkel des zusätzlichen Strahls (12) in bezug auf den Strahl (2) des Generators in der Größenordnung von 45° liegt.

9. Vorrichtung nach einem der Ansprüche 1 bis 8, dadurch gekennzeichnet, daß sie wenigstens einen zweiten zusätzlichen lichtempfindlichen Detektor (16) aufweist, der nicht notwendigerweise in der Fokusebene des optischen Systems (5) angeordnet ist und imstande ist, das von den Teilchen unter Winkeln von wenigstens gleich 45° gebeugte und/oder gestreute Licht aufzunehmen.

10. Vorrichtung nach einem der Ansprüche 1 bis 9, dadurch gekennzeichnet, daß in bezug auf die Ausbreitungsrichtung des vom Generator (1) emittierten Strahls (2) der transparente Behälter (3) oberhalb des optischen Systems (5) angeordnet ist und daß der zusätzliche Strahl (12) von der dem optischen System (5) entgegengesetzten Seite des transparenten Behälters (3) zu diesem hin gelenkt wird.

11. Vorrichtung nach einem der Ansprüche 1 bis 9, dadurch gekennzeichnet, daß in bezug auf die Ausbreitungsrichtung des vom Generator (1) emittierten Strahls (2) der transparente Behälter (3) unterhalb des optischen Systems (5) angeordnet ist und daß der zusätzliche Strahl (12) von der Seite des transparenten Behälters (3) zu diesem hin gelenkt wird, die dem optischen System zugewandt ist.

## Claims

1. Device for determining the particle size distribution of a mixture of flowing particles, including:
- a generator (1) generating a monochromatic light beam (2);
- a transparent container (3) which is placed in the path of the said beam (2) and through which the said mixture of particles travels;
- a convergent optical system (5) for forming, in its focal plane, a diffraction/scattering pattern of the said particles which are illuminated by the said beam (2);
- a set (6) of photosensitive detectors (7i) distributed radially in the said focal plane of the optical system (5); and
- means (9) for processing the electrical signals generated by the said set (6) of photosensitive detectors;
characterized in that it includes an additional monochromatic light source (11) emitting an additional beam (12) which is inclined with respect to the beam (2) from the said generator (1) and is directed onto the said transparent container (3).

2. Device according to Claim 1,
characterized in that the said set (6) of photosensitive detectors alternately observes the diffraction/scattering pattern formed by the said beam (2) from the generator (1) and that formed by the said additional beam (12).

3. Device according to either of Claims 1 and 2,
characterized in that the said beam (2) from the generator (1) and the said additional beam (12) have the same wavelength.

4. Device according to either of Claims 1 and 2,
characterized in that the said beam (2) from the generator (1) and the said additional beam (12) have different wavelengths.

5. Device according to one of Claims 1 to 4,
characterized in that the said additional beam is conveyed by an optical fibre (13).

6. Device according to one of Claims 1 to 5,
characterized in that the cross-section of the additional beam is small compared to that of the beam (2) from the said generator (1) and in that the said additional beam is directed directly onto the said transparent container.

7. Device according to any one of Claims 1 to 6,
characterized in that it includes at least one first additional photosensitive detector (14) which is connected to the said processing means (9) and enables angular measurement areas specific to the generator (1) and to the said additional source (11) to be covered.

8. Device according to any one of Claims 1 to 7,
characterized in that the angle of inclination of the additional beam (12) with respect to the beam (2) from the generator is about 45°.

9. Device according to any one of Claims 1 to 8,
characterized in that it includes at least one second additional photosensitive detector (16), not necessarily placed in the focal plane of the said optical system (5) and capable of receiving the light diffracted and/or scattered by the said particles at angles equal to at least 45°.

10. Device according to any one of Claims 1 to 9,
characterized in that the said transparent container (3) is placed, with respect to the direction of propagation of the beam (2) emitted by the said generator (1), upstream of the said optical system (5) and in that the said additional beam (12) is directed towards the said transparent container (3) from the opposite side of the latter with respect to the said optical system (5).

11. Device according to any one of Claims 1 to 9,
characterized in that the said transparent container (3) is placed, with respect to the direction of propagation of the beam (2) emitted by the said generator (1), downstream of the said optical system (5) and in that the said additional beam (12) is directed towards the said transparent container (3) from that side of the latter which is facing the said optical system.
